(19) Europäisches Patentamt
European Patent Office
Office européen des brevets

(11) **EP 3 887 770 B1**

(12) **EUROPÄISCHE PATENTSCHRIFT**

(45) Veröffentlichungstag und Bekanntmachung des Hinweises auf die Patenterteilung:
**20.09.2023 Patentblatt 2023/38**

(21) Anmeldenummer: **19797705.1**

(22) Anmeldetag: **31.10.2019**

(51) Internationale Patentklassifikation (IPC):
**G01F 1/68** (2006.01)   **G01F 25/00** (2022.01)
**G01P 5/10** (2006.01)   **G01F 25/10** (2022.01)

(52) Gemeinsame Patentklassifikation (CPC):
**G01F 1/68; G01F 25/10;** G01P 5/10

(86) Internationale Anmeldenummer:
**PCT/EP2019/079892**

(87) Internationale Veröffentlichungsnummer:
**WO 2020/108912 (04.06.2020 Gazette 2020/23)**

(54) **THERMISCHER STRÖMUNGSSENSOR UND VERFAHREN ZUM BETREIBEN DESSELBEN**

THERMAL FLOW SENSOR AND METHOD FOR OPERATING SAME

CAPTEUR D'ÉCOULEMENT THERMIQUE ET PROCÉDÉ POUR LE FAIRE FONCTIONNER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2018 DE 102018130548**

(43) Veröffentlichungstag der Anmeldung:
**06.10.2021 Patentblatt 2021/40**

(73) Patentinhaber: **Innovative Sensor Technology IST AG**
**9642 Ebnat-Kappel (CH)**

(72) Erfinder:
• **ENGEL, Bastian**
**8730 Uznach (CH)**

• **HEPP, Christoph**
**9500 Wil (CH)**
• **BERNHARDSGRÜTTER, Ralf Emanuel**
**8583 Sulgen (CH)**

(74) Vertreter: **Trenkle, Dennis**
**Endress + Hauser Group Services (Deutschland) AG+Co. KG**
**Colmarer Straße 6**
**79576 Weil am Rhein (DE)**

(56) Entgegenhaltungen:
**WO-A1-2016/137826    DE-A1-102014 115 566**

**Beschreibung**

Die Erfindung betrifft ein Verfahren zum Betreiben eines thermischen Strömungssensors, wobei der thermische Strömungssensor zumindest ein Sensorelement und eine Elektronikeinheit aufweist. Des Weiteren betrifft die Erfindung einen thermischen Strömungssensor, welcher dazu ausgestaltet ist, mittels des erfindungsgemäßen Verfahrens betrieben zu werden.

Zur Bestimmung eines Durchflusses, bzw. der Strömungsgeschwindigkeit eines Messmediums, bzw. eines Fluides, beispielsweise eines Gases oder Gasgemisches sind thermische Strömungssensoren bekannt. Diese nutzen aus, dass ein (strömendes) Messmedium Wärme von einer beheizten Fläche abtransportiert. Thermische Strömungssensoren bestehen typischerweise aus mehreren Funktionselementen, üblicherweise zumindest aus einem niederohmigen Heizelement und einem hochohmigen Widerstandselement, welches als Temperatursensor dient. Alternativ sind thermische Strömungssensoren mit mehreren niederohmigen Heizelementen als Heizer und Temperatursensor aufgebaut.

Kalorimetrische thermische Strömungssensoren bestimmen über eine Temperaturdifferenz zwischen zwei Temperatursensoren, welche flussabwärts (engl. "downstream") und flussaufwärts (engl. "upstream") von einem Heizelement angeordnet sind, den Durchfluss bzw. die Flussrate des Fluids in einem Kanal. Hierzu wird ausgenutzt, dass die Temperaturdifferenz bis zu einem gewissen Punkt linear zu dem Durchfluss bzw. der Flussrate ist. Dieses Verfahren bzw. die Methode ist in der einschlägigen Literatur ausgiebig beschrieben.

Anemometrische thermische Strömungssensoren bestehen aus zumindest einem Heizelement, welches während der Messung des Durchflusses erhitzt wird. Durch die Umströmung des Heizelements mit dem Messmedium findet ein Wärmetransport in das Messmedium statt, der sich mit der Strömungsgeschwindigkeit verändert. Durch Messung der elektrischen Größen des Heizelements kann auf die Strömungsgeschwindigkeit des Messmediums geschlossen werden.

Ein solcher anemometrischer thermischer Strömungssensor wird typischerweise in einem der folgenden beiden Regelarten betrieben:

Bei der Regelart "Constant-Current Anemometry" (CCA) wird das Heizelement mit einem konstanten Strom beaufschlagt. Durch die Umströmung mit dem Messmedium ändert sich der Widerstand des Heizelements und damit die am Heizelement abfallende Spannung, welche das Messsignal darstellt. Analog dazu funktioniert die Regelart "Constant-Voltage Anemometry" (CVA), bei welcher das Heizelement mit einer konstanten Spannung beaufschlagt wird.

Bei der Regelart "Constant-Temperature Anemometry (CTA)" wird das Heizelement auf einer im Mittel konstanten Temperatur gehalten. Mittels dieser Regelart sind relativ hohe Strömungsgeschwindigkeiten messbar. Je nach Strömungsgeschwindigkeit wird mehr oder weniger Wärme durch das fließende Messmedium abtransportiert und es muss entsprechend mehr oder weniger elektrische Leistung nachgeführt werden, um die Temperatur konstant zu halten. Diese nachgeführte elektrische Leistung ist ein Maß für die Strömungsgeschwindigkeit des Messmediums. Die abtransportierte Wärme bei anemometrischen thermischen Strömungssensoren ist jedoch von thermischen Parametern des Messmediums abhängig - in erster Linie sind dies die Wärmeleitfähigkeit und die Wärmekapazität des Messmediums. Demzufolge muss der thermische Strömungssensor vorab in einer speziellen Kalibrationseinrichtung für ein spezifisches Messmedium kalibriert werden. Wechselt das Messmedium, so muss der thermische Strömungssensor von Neuem in der Kalibrationseinrichtung kalibriert werden bevor dieser wieder richtige Werte ausgibt. Es existieren bereits Messprinzipansätze von Membranströmungssensoren für Gas, die in einem ersten Schritt Wärmeleitfähigkeit und Wärmekapazität messen (mittels konstanter Leistung oder Wechselstrom-getrieben) und diese Information in der Messung der Strömungsgeschwindigkeit zur Kompensation der Fluidabhängigkeit in einem zweiten Schritt nutzen. Oftmals werden aber gewisse Informationen über die Eigenschaft des Gases apriori benötigt, damit diese Selbstkalibrierung funktionieren kann. Patentanmeldung WO 2016/137826 A1 offenbart einen thermischen MEMS-Strömungssensor zum Messen der Strömungsrate eines Fluids ohne die Notwendigkeit für eine Kalibration des Strömungssensors für dieses bestimmte Fluid bereit. Ein Umrechnungsfaktor wird eingesetzt, um ein Maß der korrekten Strömungsrate eines unbekannten Fluids bereitzustellen. Dieser Umrechnungsfaktor wird aus dem Verhältnis der thermischen Zeitkonstante des Kalibrationsfluids zur thermischen Zeitkonstante des gemessenen Fluids hergeleitet.

Ausgehend von dieser Problematik liegt der Erfindung die Aufgabe zugrunde, ein Verfahren vorzustellen, welche eine Kalibration eines Sensors auf ein spezifisches Messmedium erlaubt, ohne dass Eigenschaften des Messmediums a priori bekannt sind.

Die Aufgabe wird durch ein Verfahren zum Betreiben eines thermischen Strömungssensors gelöst, wobei der thermische Strömungssensor zumindest ein Sensorelement und eine Elektronikeinheit aufweist, umfassend:

- Erstellen einer Grundkalibration des thermischen Strömungssensors, wobei der thermische Strömungssensor im Zuge des Erstellens der Grundkalibration mindestens eine Strömungsgeschwindigkeit eines ersten Messmediums erfasst und einen Messwert der Strömungsgeschwindigkeit erstellt, wobei das erste Messmedium definierte erste thermische Parameter, umfassend eine erste Wärmeleitfähigkeit und eine erste Wärmekapazität, aufweist und mit zumindest einem definierten Wert einer Strömungsgeschwindigkeit strömt, und wobei die Grundkalibration bewirkt, dass der von dem thermischen Strömungssensor erstellte Wert der Strömungsgeschwindigkeit des ersten Messmediums an den definierten Wert der Strömungsgeschwindigkeit des ersten Messmediums angeglichen wird;

- Bestimmen von zweiten thermischen Parametern. umfassend eine zweite Wärmeleitfähigkeit und eine zweite Wärmekapazität, eines zweiten Messmediums mittels des thermischen Strömungssensors;
- Berechnen einer Korrekturgröße, wobei die Korrekturgröße Abweichungen der zweiten thermischen Parameter des zweiten Messmediums zu den ersten thermischen Parametern des ersten Messmediums kompensiert; und
- Erfassen der Strömungsgeschwindigkeit des zweiten Messmediums und Erstellen von mittels der Korrekturgröße kompensierten Messwerten der Strömungsgeschwindigkeit.

Der Vorteil des erfindungsgemäßen Verfahrens besteht darin, dass ein thermischer Strömungssensor kundenseitig kalibriert werden kann. Hierfür ist keine Kenntnis des Benutzers über die Zusammensetzung und die thermischen Parameter des verwendeten Messmediums vonnöten. Der Kunde benötigt hierfür keinen speziellen Aufbau und kann die Kalibration am vorgesehen Betriebsort des thermischen Strömungssensors durchführen, ohne dass mit einem Referenzsensor ein bestimmter Wert einer Strömungsgeschwindigkeit eingestellt werden müsste.

In einem ersten Schritt erfolgt eine Grundkalibration des thermischen Strömungssensors. Dies bedeutet, dass die spezifischen Sensorelementcharakteristiken des thermischen Strömungssensors bestimmt werden, unter Benutzung eines Messmediums bekannter Zusammensetzung und mit bekannten thermischen Parametern. Jeder thermische Strömungssensor kann eine eigene Charakteristik aufweisen, welche durch die Produktion, Materialeigenschaften, etc. auftreten und eine gewisse Variation zwischen einzelnen thermischen Strömungssensoren, auch wenn diese scheinbar baugleich sind, hervorrufen.

Für die Grundkalibration wird in Wechselstromuntersuchung des thermischen Strömungssensors durchgeführt. Hierbei wird ein Wechselstromsignal an das Sensorelement angelegt und gleichzeitig der Spannungsabfall über dem Sensorelement erfasst. Das Spannungssignal erhält (insbesondere in der dritten harmonischen Oberschwingung) Informationen bezüglich der Wärmekapazität und der Wärmeleitfähigkeit des ersten Messmediums. Da diese Parameter bereits bekannt sind, können, beispielsweise mittels eines Matrixmodells oder mittels Simulationen, die Sensorcharakteristiken (bspw. die Wandstärke, etc.) bestimmt werden, welche für die Erstellung eines mathematischen Modells, bzw. eines heuristischen Modells des thermischen Strömungssensors verwendet wird. Anschließend wird zumindest eine spezifische Strömungsgeschwindigkeit des ersten Messmediums eingestellt. Bevorzugter Weise sind mehrere Werte der Strömungsgeschwindigkeit vorgesehen, welche nacheinander gefahren werden. Hierbei wird jeweils das von dem thermischen Strömungssensor erzeugte Ausgangssignal gemessen. Die Grundkalibration wird anschließend derart erstellt, dass diese ein Verhältnis des von dem thermischen Strömungssensor ausgegebenen Ausgangssignals, also der vom Sensor gemessene Wert der Strömungsgeschwindigkeit, an den tatsächlichen vorgelegenen Wert der Strömungsgeschwindigkeit angeglichen wird. In der einfachsten Variante geschieht dies in Form einer Tabelle, bevorzugter Weise jedoch in einer mathematischen Funktion. Typischerweise wird die Grundkalibration, also die Grundcharakterisierung des thermischen Strömungssensors, herstellerseitig vorgenommen.

Danach werden die thermischen Parameter eines zweiten Messmediums ermittelt und dazu verwendet, eine Korrekturgröße zu ermitteln, welche zur Kompensation zwischen dem ersten, zur Grundkalibration verwendeten Messmedium und dem zweiten Messmedium dient, damit der vom thermischen Strömungssensor erfasste Wert der Strömungsgeschwindigkeit korrekt widergegeben wird. Hierfür wird der thermische Strömungssensor selbst verwendet. Vereinfacht gesagt wird die Grundkalibrierung an das neue, zweite Messmedium angepasst. Diese Schritte werden bevorzugt anwenderseitig, bzw. kundenseitig, vorgenommen.

Der Begriff "Strömungsgeschwindigkeit" umfasst ebenso den Massestrom oder den Volumenstrom eines Messmediums.

Gemäß einer vorteilhaften Ausgestaltung des erfindungsgemäßen Verfahrens ist vorgesehen, dass für das Bestimmen der zweiten thermischen Parameter des zweiten Messmediums eine Strömungsgeschwindigkeit des zweiten Messmediums von Null vorliegt. Es können auch Bedingungen vorliegen, bei denen die Strömungsgeschwindigkeit des zweiten Messmediums ungleich Null beträgt. Das Bestimmen der zweiten thermischen Parameter ist dann jedoch ungleich komplexer, bzw. aufwendiger.

Gemäß einer bevorzugten Ausgestaltung des erfindungsgemäßen Verfahrens ist vorgesehen, dass das Sensorelement für das Bestimmen der zweiten thermischen Parameter des zweiten Messmediums mittels einer in das Sensorelement eingebrachten Wechselspannung periodisch erwärmt wird, wobei simultan ein Verlauf der Temperatur des Sensorelements ermittelt wird, und wobei anhand von Eigenschaften des Verlaufs der Temperatur, insbesondere der Maximalamplitude des Verlaufs der Temperatur, und einem Vergleich des Verlaufs der Wechselspannung mit dem Verlauf der Temperatur, insbesondere durch Berechnung der Phasenverschiebung zwischen dem Verlauf der Wechselspannung und dem Verlauf der Temperatur, die zweiten thermischen Parameter bestimmt werden. Dies sieht also vor, dass das zweite Messmedium mittels des Sensorelements, welches auch als Heizelement dienen kann, periodisch erwärmt wird, wobei die dadurch entstehenden Temperaturoszillationen gemessen werden. Aus deren Frequenzabhängigkeit können dann die zweiten thermischen Parameter bestimmt werden.

Gemäß einer besonders bevorzugten Ausgestaltung des erfindungsgemäßen Verfahrens ist vorgesehen, dass die dritte harmonische Oberschwingung des Verlaufs der Temperatur mit der dritten harmonischen Oberschwingung des Verlaufs der Temperatur zum Bestimmen der zweiten thermischen Parameter verglichen wird. Dies wird als sogenannte "3-Omega-Methode" bezeichnet. Grundsätzlich existiert auch eine Wärmeleitfähigkeits- und Wärmekapazitätsabhängigkeit in der Grundschwingung, diese ist jedoch um Größenordnungen geringer und daher schwieriger zu analysieren. Die Analyse der dritten harmonischen Oberschwingung ist daher wesentlich einfacher durchzuführen.

Gemäß einer vorteilhaften Ausgestaltung des erfindungsgemäßen Verfahrens ist vorgesehen, dass ein mathematisches Modell des Strömungssensors für das Berechnen der Korrekturgröße verwendet wird, wobei das mathematische Modell eine Abhängigkeit eines erstellten Messwerts einer erfassten Strömungsgeschwindigkeit von thermischen Parametern, umfassend die Wärmeleitfähigkeit und die Wärmekapazität, eines jeden beliebigen Messmediums beschreibt. Gegebenenfalls kann auch ein heuristisches Modell verwendet werden.

Gemäß einer vorteilhaften Ausgestaltung des erfindungsgemäßen Verfahrens ist vorgesehen, dass die erstellte Grundkalibration in der Elektronikeinheit gespeichert wird. Wie obig beschrieben, wird die Grundkalibration bevorzugt herstellerseitig durchgeführt. Damit der Kunde, bzw. der Benutzer, die nachfolgenden Schritte des Verfahrens kundenseitig, bzw. anwenderseitig, durchführen kann, muss diesem die Daten der Grundkalibration zur Verfügung gestellt werden. Es ist daher vorgesehen, diese Daten der Grundkalibration direkt in die Elektronikeinheit des thermischen Strömungssensors zu speichern, woraufhin diese vom Kunden, bzw. vom Benutzer, ausgelesen werden kann.

Gemäß einer bevorzugten Ausgestaltung des erfindungsgemäßen Verfahrens ist vorgesehen, dass die Schritte des Bestimmens der zweiten thermischen Parameter des zweiten Messmediums und des Berechnens der Korrekturgröße wiederholt werden, im Falle, dass das zweite Messmedium gewechselt wird. Diese Schritte können erneut kundenseitig, bzw. anwenderseitig, durchgeführt werden. Zum Verwenden des thermischen Strömungssensors in einer neuen Anwendung muss dieser daher nicht zuerst an den Hersteller gesendet werden. Auch eine Änderung der Zusammensetzung des zweiten Messmediums, beispielsweise durch chemische Zersetzung des zweiten Messmediums, kann auf diese Art und Weise kompensiert werden.

Gemäß einer vorteilhaften Weiterbildung des erfindungsgemäßen Verfahrens ist vorgesehen, dass die ersten thermischen Parameter des ersten Messmediums neu bestimmt werden oder wobei die zweiten thermischen Parameter des zweiten Messmediums neu bestimmt werden und mit den ursprünglichen ersten, bzw. zweiten thermischen Parametern verglichen werden und eine Abweichung bestimmt wird, wobei anhand der Abweichung auf einen Zustand des thermischen Strömungssensors geschlossen wird. Hierdurch können Veränderungen/Zustände des thermischen Strömungssensors detektiert werden, ohne diesen auszubauen und auf herkömmliche Art und Weise (beispielsweise mittels optischer Analyseverfahren) zu analysieren und/oder diesen beim Hersteller einzusenden. Voraussetzung hierbei ist jedoch, dass sich die Eigenschaften des ersten, bzw. des zweiten, Messmediums nicht geändert haben.

Zustände, beziehungsweise Veränderungen, des Strömungssensors können eine oder mehrere der folgenden sein:

- Verunreinigungen des Sensorelements, bzw. des thermischen Strömungssensors;
- Ablagerungen auf dem Sensorelement, bzw. auf dem thermischen Strömungssensor;
- Ausbildung eines Biofilms auf dem Sensorelement, bzw. auf dem thermischen Strömungssensor;
- Eine Beschädigung des Sensorelements; bzw. des thermischen Strömungssensors;
- Eine zumindest teilweise Zersetzung des zweiten Messmediums.

Gemäß einer bevorzugten Ausgestaltung des erfindungsgemäßen Verfahrens ist vorgesehen, dass die Schritte des Erstellens der Grundkalibrierung, des Bestimmen der zweiten thermischen Parameter des zweiten Messmediums und des Berechnens der Korrekturgröße wiederholt werden, im Falle, dass ein Defekt des thermischen Strömungssensors auftritt. Ist der thermische Strömungssensor trotz des Defekts noch funktionsfähig, so weist dieser gegebenenfalls eine geänderte Sensorelementcharakteristik auf. In diesem Falle ist der thermische Strömungssensor beim Hersteller einzusenden, damit dieser den Schritt des Erstellens der Grundkalibrierung wiederholen kann.

Gemäß einer vorteilhaften Ausgestaltung des erfindungsgemäßen Verfahrens ist vorgesehen, dass der thermische Strömungssensor für das Erstellen der Grundkalibration mit einer Kalibrationseinrichtung verbunden wird, insbesondere temporär, wobei die Kalibrationseinrichtung eine Rohrleitung, bzw. einen Kanal, und ein Pumpelement aufweist, und wobei das Pumpelement eine Durchströmung der Rohrleitung, bzw. des Kanals, mit dem ersten Messmedium mit dem definierten Wert der Strömungsgeschwindigkeit etabliert. Mittels dieser Kalibrationseinrichtung, welche insbesondere herstellerseitig vorgesehen ist, können definierte Zustände, bzw. Werte, der Strömungsgeschwindigkeit des ersten Messmediums generiert werden, so dass die Grundkalibration des thermischen Strömungssensors hochgenau erstellt werden kann.

Gemäß einer vorteilhaften Ausgestaltung des erfindungsgemäßen Verfahrens ist vorgesehen, dass der thermische Strömungssensor für das Bestimmen der zweiten thermischen Parameter des zweiten Messmediums und für das Erfassen der Strömungsgeschwindigkeit des zweiten Messmediums an eine mit dem zweiten Messmedium durchströmte Rohrleitung, bzw. einen Kanal, einer Messstelle angebracht wird, welche mit dem zweiten Messmedium durchströmt wird. Die Bestimmung der thermischen Parameter des zweiten Messmediums kann also vorteilhaft direkt am für den Betrieb des thermischen Strömungssensors vorgesehenen Einbauort geschehen und benötigt kein weiteres, spezielles Messequipment. Ein Ausbau des Sensors für einen eventuellen Wechsel des zweiten Messmediums oder für eine Überprüfung des Sensors und/oder des zweiten Messmediums entfällt somit komplett.

Des Weiteren wird die Aufgabe durch einen thermischen Strömungssensor gelöst, welcher dazu ausgestaltet ist, mittels des erfindungsgemäßen Verfahrens betrieben zu werden. Wesentlich für den thermischen Strömungssensor ist es, dass dieser sehr sensitiv ist und eine geringe Ansprechzeit aufweist - beispielsweise durch einen vereinfachten Schichtaufbau, was außerdem das mathematische Modell des thermischen Strömungssensors vereinfacht und die dazugehörigen Unsicherheiten verringert.

Die Erfindung wird anhand der nachfolgenden Figuren näher erläutert. Es zeigen

Fig. 1: ein Ausführungsbeispiel des erfindungsgemäßen Verfahrens; und

Fig. 2: ein Ausführungsbeispiel eines erfindungsgemäßen thermischen Strömungssensors.

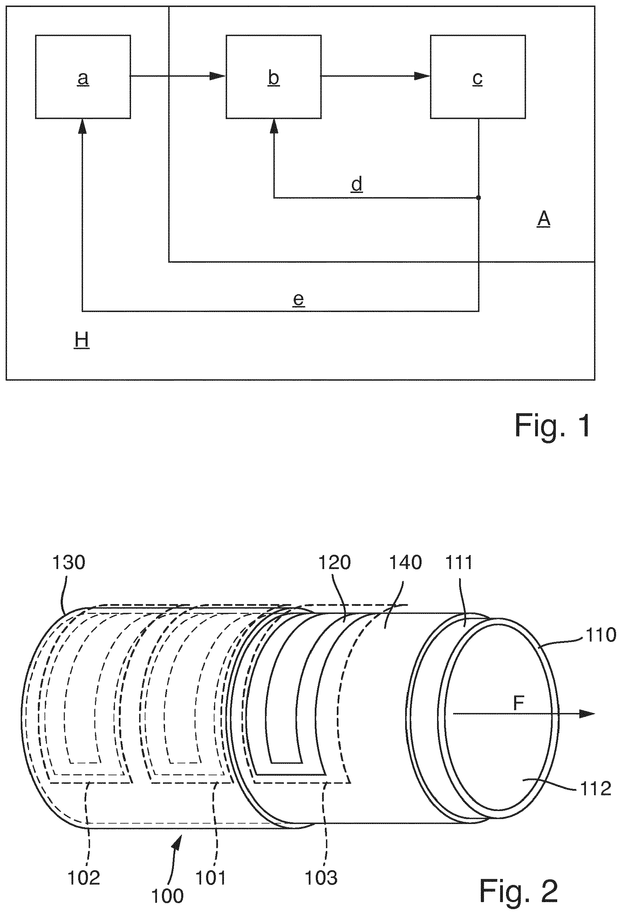

Fig. 1 zeigt ein Ablaufschema eines Ausführungsbeispiels des erfindungsgemäßen Verfahrens. Das Verfahren dient zum Kalibrieren eines thermischen Strömungssensors 100 auf ein zweites Messmedium 2 für eine Applikation eines Anwenders A.

Der erste Verfahrensschritt a wird seitens des Herstellers H oder seitens eines Kalibrierservices durchgeführt. Der thermische Strömungssensor 100 wird mit einer Kalibrationseinrichtung verbunden wird. Die Kalibrationseinrichtung weist eine Rohrleitung, bzw. einen Kanal, und ein Pumpelement auf. Das Pumpelement ist dazu ausgestaltet, eine Durchströmung der Rohrleitung, bzw. des Kanals, mit einem ersten Messmedium mit einem definierten Wert einer Strömungsgeschwindigkeit zu etablieren. Die Zusammensetzung des ersten Messmediums und dessen thermische Parameter sind bekannt. Besonders relevant als thermische Parameter für das erfindungsgemäße Verfahren sind beispielsweise die Wärmeleitfähigkeit und die Wärmekapazität eines Messmediums.

Für die Grundkalibration wird in Wechselstromuntersuchung des thermischen Strömungssensors 100 durchgeführt. Hierbei wird ein Wechselstromsignal an das Sensorelement 101, 102, 103 angelegt und gleichzeitig der Spannungsabfall über dem Sensorelement 101, 102, 103 erfasst. Das Spannungssignal erhält (insbesondere in der dritten harmonischen Oberschwingung) Informationen bezüglich der Wärmekapazität und der Wärmeleitfähigkeit des ersten Messmediums. Da diese Parameter bereits bekannt sind, können, beispielsweise mittels eines Matrixmodells oder mittels Simulationen, die Sensorcharakteristiken (bspw. die Wandstärke, etc.) bestimmt werden, welche für die Erstellung eines mathematischen Modells, bzw. eines heuristischen Modells des thermischen Strömungssensors verwendet wird.

Diese Wechselstromuntersuchung kann beispielsweise über eine Lock-In-Methode realisiert werden.

Anschließend wird die Rohrleitung, bzw. der Kanal von dem Messmedium nacheinander mit verschiedenen Werten der Strömungsgeschwindigkeit durchströmt und das Ausgangssignal des thermischen Strömungssensors erfasst. Anschließend wird eine Grundkalibrierung erstellt. Die Grundkalibrierung weist die jeweils erhobenen Ausgangssignale, bzw. die Messwerte des thermischen Strömungssensors 100, den tatsächlich vorgelegenen Strömungsgeschwindigkeiten zu. Anschließend wird eine Kalibrierfunktion erstellt, welche eine Funktion der Strömungsgeschwindigkeit des ersten Messmediums abhängig von den Ausgangssignalen, bzw. den Messwerten, des thermischen Strömungssensors 100 darstellt. Die Daten dieser Grundkalibrierung, insbesondere die Parameter der Kalibrierfunktion, wird anschließend in einer Elektronikeinheit des thermischen Strömungssensors 100 gespeichert. Anschließend wird der thermische Strömungssensor 100 aus der Kalibrationseinrichtung ausgebaut und an den Anwender A übergeben. Der Anwender A baut den thermischen Strömungssensor 100 anschließend in eine Messstelle ein, wo der thermische Strömungssensor 100 dem Zweck dient, die Strömungsgeschwindigkeit eines zweiten Messmediums 2 zu bestimmen, welches eine Rohrleitung, bzw. einen Kanal, der Messstelle durchströmt. Die thermischen Parameter des zweiten Messmediums 2 sind insbesondere nicht bekannt.

In einem zweiten Verfahrensschritt b wird das zweite Messmedium 2 charakterisiert, indem die thermischen Parameter des zweiten Messmediums bestimmt werden. Hierfür wird die sogenannte "3-Omega-Methode" verwendet, wobei die Strömungsgeschwindigkeit des zweiten Messmediums, während dieses Verfahrensschrittes b Null beträgt. Ein Sensorelement 101, 102, 103 des thermischen Strömungssensors 100 wird mit einer Wechselspannung, bzw. einem Wechselstrom periodisch angeregt und wirkt als Heizelement. Dadurch wird periodisch ein Wärmeimpuls in das zweite Messmedium 2 induziert. Gleichzeitig wird die Temperatur des Sensorelements ermittelt. Durch den Vergleich des Anregungssignals mit dem Temperatursignal, insbesondere deren dritter harmonischer Oberschwingung, können die thermischen Parameter des zweiten Messmediums 2 bestimmt werden.

In einem dritten Verfahrensschritt werden die Unterschiede der thermischen Parameter zwischen dem ersten Messmedium und dem zweiten Messmedium 2 ermittelt. Konkret wird eine Korrekturgröße verwendet, welche auf die Grundkalibrierung angewandt wird, um die vom thermischen Strömungssensor erstellten Ausgangssignale, bzw. die ausgegebenen Messwerte, den tatsächlich vorliegenden Strömungsgeschwindigkeiten des zweiten Messmediums 2 korrekt zuordnen zu können.

Hierfür wird ein mathematisches Modell des Strömungssensors 100 verwendet, welches eine Abhängigkeit eines Ausgangssignals einer erfassten Strömungsgeschwindigkeit von thermischen Parametern eines Messmediums beschreibt:

$$P \sim \dot{\phi}_m \cdot c_p \cdot \Delta T \cdot \frac{1}{1 + Bi(k)} \left[ 1 - \exp(-\frac{h(k) \cdot A}{\dot{\phi}_m \cdot c_p}) \right] + offset$$

P bezeichnet die ausgegebene elektrische Leistung [W] des thermischen Strömungssensors 100.
$\dot{\phi}_m$ bezeichnet den Massenstrom [kg/s] eines Messmediums.
$c_p$ bezeichnet die spezifische Wärmekapazität [J/(kg K)] des Messmediums.
$\Delta T$ bezeichnet die Übertemperatur.
k bezeichnet die Wärmeleitfähigkeit [W/(m K)] des Messmediums.
Bi(k) bezeichnet die Biotzahl [ s], welche insbesondere von k abhängig ist.
h(k) bezeichnet den Wärmeübergangskoeffizienten [W/(m$^2$ k), abhängig von K
A bezeichnet die Fläche des Heizers [m$^2$].

Dieses mathematische Modell ist verschieden für jeweilige Typen von thermischen Strömungssensoren und soll hier als rein beispielhaft verstanden sein. Alternativ kann auch ein passendes heuristisches Modell verwendet werden.

Unter Ausnutzung des mathematischen Modells und unter Kenntnis der thermischen Parameter des zweiten Messmediums kann somit die Korrekturgröße berechnet werden, welche zur Kompensation der Unterschiede zwischen dem ersten und dem zweiten Messmedium 2 dient.

Der thermische Strömungssensor 100 ist nun bereits zur Anwendung in der Messstelle des Anwenders A.

Der Verfahrensschritt d erlaubt es, sowohl den aktuellen Zustand des Sensors zu bestimmen, als auch den aktuellen Zustand des zweiten Messmediums 2 zu bestimmen, als auch einen Wechsel des zweiten Messmediums 2 vorzunehmen.

Im ersten Fall wird der Verfahrensschritt b wiederholt, um die thermischen Parameter des zweiten Messmediums 2 erneut zu bestimmen. Es ist hierbei wesentlich, dass die Zusammensetzung des zweiten Messmediums 2 unverändert ist. Treten nun Abweichungen zwischen den bereits bestimmten thermischen Parametern und den neu bestimmten thermischen Parametern auf, so kann auf einen Zustand des thermischen Strömungssensors 100 geschlossen werden.

Zustände, beziehungsweise Veränderungen, des Strömungssensors 100 können eine oder mehrere der folgenden sein:

- Verunreinigungen des Sensorelements 101, 102, 103, bzw. des thermischen Strömungssensors 100;
- Ablagerungen auf dem Sensorelement 101, 102, 103, bzw. auf dem thermischen Strömungssensor 100;
- Ausbildung eines Biofilms auf dem Sensorelement 101, 102, 103, bzw. auf dem thermischen Strömungssensor 100;
- Eine Beschädigung des Sensorelements 101, 102, 103; bzw. des thermischen Strömungssensors 100.

Im zweiten Fall wird ebenfalls der Verfahrensschritt b wiederholt, um die thermischen Parameter des zweiten Messmediums 2 erneut zu bestimmen. Es ist hierbei vorteilhaft, dass der Zustand des thermischen Strömungssensors 100 unverändert ist. Treten nun Abweichungen zwischen den bereits bestimmten thermischen Parametern und den neu bestimmten thermischen Parametern auf, so kann auf einen Zustand des zweiten Messmediums 2 geschlossen werden.

Ein Zustand, beziehungsweise eine Veränderung, des zweiten Messmediums 2 kann beispielsweise eine Zersetzung des zweiten Messmediums 2 sein.

Im dritten Fall werden die Verfahrensschritte b und c wiederholt, um den thermischen Strömungssensor auf das neue zweite Messmedium 2 zu kalibrieren.

Der Verfahrensschritt e erlaubt es, den thermischen Strömungssensor 100 bei Auftreten eines Defekts, welcher die Messeigenschaften des thermischen Strömungssensors 100 zwar verändert, aber die Funktionsfähigkeit des thermischen Strömungssensors 100 nicht beeinträchtigt komplett neu zu charakterisieren und zu kalibrieren. Hierfür werden die Verfahrensschritte a bis c wiederholt, wobei der thermische Strömungssensor 100 zumindest zeitweise an den Hersteller H oder an einen Kalibrierservice übergeben wird.

Wesentlich für den verwendeten thermischen Strömungssensor ist es, dass dieser sehr sensitiv ist und eine geringe Ansprechzeit aufweist. Fig. 2 zeigt ein Ausführungsbeispiel eines solchen erfindungsgemäßen thermischen Strömungssensors 100. Fig. 2a zeigt eine isometrische Ansicht des thermischen Strömungssensors 100. Fig. 2b zeigt einen Querschnitt orthogonal zu einer Durchflussrichtung F des Messmediums 2 durch das Trägerelement 110 des thermischen Strömungssensors 100.

Als Trägerelement 110 wird ein Rohr verwendet, welches von einem Messmedium 2 in einer Flussrichtung F durchfließbar ist. Das Trägerelement 110 besteht aus einem metallischen Material, insbesondere Edelstahl, und weist beispielsweise eine Wandstärke von 150 μm auf.

Auf eine erste, dem Messmedium abgewandte, Oberfläche 111 des Trägerelements ist eine elektrische Isolationsschicht 140 mittels eines Dünnschichtverfahrens aufgetragen. Bei der elektrischen Isolationsschicht 140 handelt es sich in diesem Beispiel um ein keramisches Material, beispielsweise $Al_2O_3$, mit einer Schichtdicke von ca. 2 μm.

Auf die elektrische Isolationsschicht 140 wird anschließend eine funktionale Schicht 120 aus Platin aufgetragen. Die funktionale Schicht wird mittels eines Dünnschichtverfahrens, beispielsweise Sputtern oder Aufdampfen, aufgetragen und weist eine Schichtdicke von ca. 800 nm auf. Die elektrische Isolationsschicht dient der elektrischen Isolation zwischen der funktionalen Schicht 120 und dem Trägerelement. Die elektrische Isolationsschicht 140 und die funktionale Schicht 120 weisen im Wesentlichen dieselbe konvexe Krümmung auf wie die erste Oberfläche 111.

In einem anschließenden Verfahrensschritt wird die funktionale Schicht mittels eines Laserablationsverfahrens strukturiert. Hierbei trägt ein Laser das Material der funktionalen Schicht sukzessive ab, so die Strukturen von Sensorelementen 101, 102, 103 entstehen. Beispielsweise handelt es sich bei diesen Strukturen um Widerstandsstrukturen. Die Widerstandsstruktur dient dem Bestimmen der Temperatur des Messmediums. Dazu kann der Widerstandswert der Widerstandsstruktur gemessen werden. Der gemessene Widerstandswert ist ein direkt proportionales Maß für die an der Widerstandsstruktur anliegende Temperatur. Durch Anlegen einer elektrischen Spannung, bzw. eines elektrischen Stroms, an eine solche Widerstandsstruktur wird diese erhitzt, so dass ein Sensorelement 101 102, 103 auch als Heizelement dienen kann.

Ein andere Verfahren zur Strukturierung der funktionalen Schicht stellt ein 3D-Lithografieverfahren dar. Der Vorteil des Verwendens des Laserablationsverfahrens gegenüber des 3D-Lithografieverfahrens liegt jedoch in geringerem Aufwand, resultierend in geringeren Kosten, und in erhöhter Umweltfreundlichkeit.

Anschließend wird eine Passivierungsschicht 130, insbesondere bestehend aus einem keramischen Material, auf der funktionalen Schicht 120 und auf der elektrischen Isolationsschicht 140 aufgetragen. Diese besitzt eine Schichtdicke von ca. 30 μm und dient dem Schutz der funktionalen Schicht 120 und der elektrischen Isolationsschicht 140 vor Umwelteinflüssen, beispielsweise Korrosion.

Die Vorteile des erfindungsgemäßen thermischen Strömungssensors 100 lassen sich wie folgt beschreiben:

- Geringer Abstand $d_3$ zwischen der funktionalen Sicht 120 und dem Messmedium 2. Dadurch weist das Sensorelement eine vergleichsweise niedrige Ansprechzeit und eine entsprechend hohe Sensitivität auf. Der Wärmeübertrag zwischen der funktionalen Schicht 120 und dem Messmedium, bzw. vice versa, erfolgt lediglich durch das Trägerelement und ggf. durch die elektrische Isolationsschicht 140 hindurch.

- Durch direktes Auftragen der funktionalen Schicht 140 auf dem Trägerelement kann auf eine Lötschicht, wie diese bei herkömmlichen Sensorelementen verwendet wird, verzichtet werden. Dadurch wird die Serienstreuung verringert, welche sich in einer variablen Ansprechzeit und einer variablen Sensitivität von Sensorelementen untereinander äußert.

- Vorteilhaft beim Verwenden des Laserablationsverfahrens ist, dass, im Gegensatz zu Sensorelementen, wie diese aus dem Stand der Technik bekannt sind, muss die Oberfläche 111 nicht bearbeitet, beispielsweise begradigt werden. Der Fokuspunkt des Lasers ist dreidimensional verschiebbar.

Eine alternative Ausgestaltung des Sensorelements 100 besteht in dem Verwenden eines nichtleitfähigen Materials für das Trägerelement 110. In diesem Fall kann auf die elektrisch isolierende Schicht 140 verzichtet werden, so dass es vorgesehen ist, die funktionale Schicht 10 direkt auf dem Trägerelement 110 aufzubringen.

Der thermische Strömungssensor weist zumindest ein Sensorelement 101 auf. In einem solchen Fall dient das Sensorelement 101 dem abwechselnden zeitweisen Erhitzen des Messmediums 2 und dem Bestimmen der Temperatur des Messmediums 2.

Es kann vorgesehen sein, zwei oder mehrere, insbesondere in Flussrichtung angeordnete, Sensorelemente 101, 102, 103 zu verwenden, wobei eines der Sensorelemente 101 als Heizelement ausgestaltet und mittig angeordnet ist und wobei jeweils eines der Sensorelemente 102, 103 als Temperatursensoren ausgestaltet sind und in Flussrichtung F aufwärts und in Flussrichtung F abwärts vom Heizelement angeordnet sind.

Ein solcher thermischer Strömungssensor 100 ist in den herkömmlichen bekannten Betriebsmodi "kalorimetrische Strömungsmessung", "anemometrische Strömungsmessung" und "Time-of-Flight-Strömungsmessung" betreibbar und weist neben den Sensorelementen 100 eine eine Elektronikeinheit auf, welche eine Steuereinheit und eine Auswerteeinheit umfasst, eine Spannungs-/Stromquelle und Verdrahtungen auf.

Kalorimetrische thermische Strömungssensoren 100 bestimmen über eine Temperaturdifferenz zwischen zwei Sensorelementen 102, 103 in Gestalt von Temperatursensoren, welche flussabwärts (engl. "downstream") und flussaufwärts (engl. "upstream") von einem als Heizelement ausgestalteten Sensorelement 101 angeordnet sind, den Durch-

EP 3 887 770 B1

fluss bzw. die Flussrate des Messmediums 2 in einem Kanal. Hierzu wird ausgenutzt, dass die Temperaturdifferenz bis zu einem gewissen Punkt linear zu dem Durchfluss bzw. der Flussrate ist. Dieses Verfahren bzw. die Methode ist in der einschlägigen Literatur ausgiebig beschrieben.

Anemometrische thermische Strömungssensoren bestehen 100 aus zumindest einem Sensorelement 101 in Gestalt eines Heizelements, welches während der Messung des Durchflusses erhitzt wird. Durch die Umströmung des Heizelements mit dem Messmedium 2 findet ein Wärmetransport in das Messmedium statt, der sich mit der Strömungsgeschwindigkeit verändert. Durch Messung der elektrischen Größen des Heizelements kann auf die Strömungsgeschwindigkeit des Messmediums geschlossen werden.

Strömungssensoren nach dem sogenannten "Time-of-Flight"-Messprinzip weisen zumindest ein Sensorelement 101 in Gestalt eines Heizelements und ein Sensorelement 102, 103 in Gestalt eines Temperatursensors auf. Durch das Heizelement wird ein kurzzeitiger Wärmeimpuls in das Messmedium 2 abgegeben, welcher einer lokale Erwärmung des Messmediums 2 verursacht. Das fließende Messmedium 2 verursacht eine Bewegung der lokalen Erwärmung entsprechend des vorliegenden Flusses. Gelangt die lokale Erwärmung in die Nähe des Temperatursensors, wird diese von dem Temperatursensor erfasst. Eine Auswerteeinheit bestimmt die Zeitdifferenz zwischen dem Induzieren des Wärmeimpulses und der Detektion der lokalen Erwärmung durch den Temperatursensor. Die Zeitdifferenz stellt ein Maß für die Strömungsgeschwindigkeit des Messmediums dar. Je niedriger die Zeitdifferenz ist, desto höher ist die vorliegende Strömungsgeschwindigkeit des Messmediums 2, und vice versa.

Anstatt der Ausgestaltung eines Sensorelements 101, 102, 103 als Heizelement kann dieses auch als Kühlelement, beispielsweise ein Peltierelement, ausgestaltet. Die obig beschriebenen Betriebsmodi sind unter Benutzung eines Kühlelements ebenfalls ausführbar, es wird hierbei ein Kühlimpuls in das Messmedium induziert.

Neben dieser konkreten Ausgestaltung eines thermischen Strömungssensors 100 versteht es sich für den Fachmann von selbst, dass beliebige weitere Ausgestaltungen und Typen von thermischen Strömungssensoren im Zusammenhang mit dem erfindungsgemäßen Verfahren verwendet werden können, so lange diese eine genügend hohe Sensitivität aufweisen.

**Bezugszeichenliste**

| 100 | thermischer Strömungssensor |
|---|---|
| 101, 102, 103 | Sensorelemente |
| 110 | Trägerelement |
| 111 | erste Oberfläche |
| 112 | zweite Oberfläche |
| 120 | funktionale Schicht |
| 130 | Passivierungsschicht |
| 140 | elektrische Isolationsschicht |
| 2 | Messmedium |
| a, b, c, d, e | Verfahrensschritte |
| A | Anwender |
| H | Hersteller |

**Patentansprüche**

1. Verfahren zum Betreiben eines thermischen Strömungssensors (100), wobei der thermische Strömungssensor (100) zumindest ein Sensorelement (101, 102, 103) und eine Elektronikeinheit aufweist, umfassend:

   - Erstellen einer Grundkalibration des thermischen Strömungssensors (100), wobei der thermische Strömungssensor (100) im Zuge des Erstellens der Grundkalibration mindestens eine Strömungsgeschwindigkeit eines ersten Messmediums erfasst und einen Messwert der Strömungsgeschwindigkeit erstellt, wobei das erste Messmedium definierte erste thermische Parameter, umfassend eine erste Wärmeleitfähigkeit und eine erste Wärmekapazität, aufweist und mit zumindest einem definierten Wert einer Strömungsgeschwindigkeit strömt, und wobei die Grundkalibration bewirkt, dass der von dem thermischen Strömungssensor (100) erstellte Wert der Strömungsgeschwindigkeit des ersten Messmediums an den definierten Wert der Strömungsgeschwindigkeit des ersten Messmediums angeglichen wird;
   - Bestimmen von zweiten thermischen Parametern, umfassend eine zweite Wärmeleitfähigkeit und eine zweite Wärmekapazität, eines zweiten Messmediums (2) mittels des thermischen Strömungssensors (100);

- Berechnen einer Korrekturgröße, wobei die Korrekturgröße Abweichungen der zweiten thermischen Parameter des zweiten Messmediums (2) zu den ersten thermischen Parametern des ersten Messmediums (2) kompensiert; und

- Erfassen der Strömungsgeschwindigkeit des zweiten Messmediums (2) und Erstellen von mittels der Korrekturgröße kompensierten Messwerten der Strömungsgeschwindigkeit.

2. Verfahren nach Anspruch 1, wobei für das Bestimmen der zweiten thermischen Parameter des zweiten Messmediums (2) eine Strömungsgeschwindigkeit des zweiten Messmediums (2) von Null vorliegt.

3. Verfahren nach einem der Ansprüche 1 oder 2, wobei das Sensorelement (101, 102, 103) für das Bestimmen der zweiten thermischen Parameter des zweiten Messmediums (2) mittels einer in das Sensorelement (101, 102, 103) eingebrachten Wechselspannung periodisch erwärmt wird, wobei simultan ein Verlauf der Temperatur des Sensorelements (101, 102, 103) ermittelt wird, und wobei anhand von Eigenschaften des Verlaufs der Temperatur, insbesondere der Maximalamplitude des Verlaufs der Temperatur, und einem Vergleich des Verlaufs der Wechselspannung mit dem Verlauf der Temperatur, insbesondere durch Berechnung der Phasenverschiebung zwischen dem Verlauf der Wechselspannung und dem Verlauf der Temperatur, die zweiten thermischen Parameter bestimmt werden.

4. Verfahren nach Anspruch 3, wobei die dritte harmonische Oberschwingung des Verlaufs der Temperatur mit der dritten harmonischen Oberschwingung des Verlaufs der Temperatur zum Bestimmen der zweiten thermischen Parameter verglichen wird.

5. Verfahren nach zumindest einem der vorherigen Ansprüche, wobei ein mathematisches Modell des Strömungssensors (100) für das Berechnen der Korrekturgröße verwendet wird, wobei das mathematische Modell eine Abhängigkeit eines erstellten Messwerts einer erfassten Strömungsgeschwindigkeit von thermischen Parametern, umfassend die Wärmeleitfähigkeit und die Wärmekapazität, eines jeden beliebigen Messmediums (2) beschreibt.

6. Verfahren nach zumindest einem der vorherigen Ansprüche, wobei die erstellte Grundkalibration in der Elektronikeinheit gespeichert wird.

7. Verfahren nach zumindest einem der vorherigen Ansprüche, wobei die Schritte des Bestimmens der zweiten thermischen Parameter des zweiten Messmediums (2) und des Berechnens der Korrekturgröße wiederholt werden, im Falle, dass das zweite Messmedium (2) gewechselt wird.

8. Verfahren nach zumindest einem der vorherigen Ansprüche, wobei die ersten thermischen Parameter des ersten Messmediums neu bestimmt werden oder wobei die zweiten thermischen Parameter des zweiten Messmediums (2) neu bestimmt werden und mit den ursprünglichen ersten, bzw. zweiten thermischen Parametern verglichen werden und eine Abweichung bestimmt wird, wobei anhand der Abweichung auf einen Zustand des thermischen Strömungssensors (100) und/oder des zweiten Messmediums (2) geschlossen wird.

9. Verfahren nach Anspruch 8, wobei anhand der Abweichung auf einen oder mehreren der folgenden Zustände des thermischen Strömungssensors (100) oder des zweiten Messmediums (2) geschlossen wird:

- Verunreinigungen des Sensorelements (101, 102, 103), bzw. des thermischen Strömungssensors (100);
- Ablagerungen auf dem Sensorelement (101, 102, 103), bzw. auf dem thermischen Strömungssensor (100);
- Ausbildung eines Biofilms auf dem Sensorelement (101, 102, 103), bzw. auf dem thermischen Strömungssensor (100);
- Eine Beschädigung des Sensorelements (101, 102, 103); bzw. des thermischen Strömungssensors (100);
- Eine zumindest teilweise Zersetzung des zweiten Messmediums (2).

10. Verfahren nach zumindest einem der vorherigen Ansprüche, wobei die Schritte des Erstellens der Grundkalibrierung, des Bestimmen der zweiten thermischen Parameter des zweiten Messmediums (2) und des Berechnens der Korrekturgröße wiederholt werden, im Falle, dass ein Defekt des thermischen Strömungssensors (100) auftritt.

11. Verfahren nach zumindest einem der vorherigen Ansprüche, wobei der thermische Strömungssensor (100) für das Erstellen der Grundkalibration mit einer Kalibrationseinrichtung verbunden wird, insbesondere temporär, wobei die Kalibrationseinrichtung eine Rohrleitung, bzw. einen Kanal, und ein Pumpelement aufweist, und wobei das Pumpelement eine Durchströmung der Rohrleitung, bzw. des Kanals, mit dem ersten Messmedium mit dem definierten Wert der Strömungsgeschwindigkeit etabliert.

12. Verfahren nach zumindest einem der vorherigen Ansprüche, wobei der thermische Strömungssensor (100) für das Bestimmen der zweiten thermischen Parameter des zweiten Messmediums (2) und für das Erfassen der Strömungsgeschwindigkeit des zweiten Messmediums (2) an eine mit dem zweiten Messmedium (2) durchströmte Rohrleitung, bzw. einen Kanal, einer Messstelle angebracht wird, welche mit dem zweiten Messmedium (2) durchströmt wird.

13. Thermischer Strömungssensor (100), wobei der thermische Strömungssensor (100) zumindest ein Sensorelement (101, 102, 103) und eine Elektronikeinheit aufweist, welcher dazu ausgestaltet ist, mittels des Verfahrens nach zumindest einem der Ansprüche 1 bis 12 betrieben zu werden.

## Claims

1. A method for operating a thermal flow sensor (100), wherein the thermal flow sensor (100) has at least one sensor element (101, 102, 103) and an electronics unit, the method comprising the steps of:

   - creating a basic calibration of the thermal flow sensor (100), wherein, during the creation of the basic calibration, the thermal flow sensor (100) senses at least a flow speed of a first measurement medium and creates a measured value of the flow speed, wherein the first measurement medium has defined first thermal parameters, comprising a first thermal conductivity and a first thermal capacity and flows with at least one defined value of a flow speed, and wherein the basic calibration causes the value, created by the thermal flow sensor (100), of the flow speed of the first measurement medium to be adjusted to the defined value of the flow speed of the first measurement medium;
   - determining second thermal parameters, comprising a second thermal conductivity and a second thermal capacity, of a second measurement medium (2) by means of the thermal flow sensor (100);
   - calculating a correction variable, wherein the correction variable compensates deviations between the second thermal parameters of the second measurement medium (2) and the first thermal parameters of the first measurement medium (2); and
   - sensing the flow speed of the second measurement medium (2) and creating flow speed measured values compensated by means of the correction variable.

2. The method according to claim 1, wherein, for the determination of the second thermal parameters of the second measurement medium (2), a flow speed of the second measurement medium (2) of zero is present.

3. The method according to any one of claims 1 or 2, wherein, for the determination of the second thermal parameters of the second measurement medium (2), the sensor element (101, 102, 103) is periodically heated by means of an alternating voltage introduced into the sensor element (101, 102, 103), wherein, simultaneously, a course of the temperature of the sensor element (101, 102, 103) is determined, and wherein the second thermal parameters are determined on the basis of properties of the profile of the temperature, in particular the maximum amplitude of the course of the temperature, and a comparison of the course of the alternating voltage with the course of the temperature, in particular by calculating the phase shift between the course of the alternating voltage and the course of the temperature.

4. The method according to claim 3, wherein the third harmonic of the course of the temperature is compared with the third harmonic of the course of the temperature for determination of the second thermal parameters,.

5. The method according to at least one of the preceding claims, wherein a mathematical model of the flow sensor (100) is used for the calculation of the correction variable, wherein the mathematical model describes a dependency of a created measured value of a sensed flow speed on thermal parameters, comprising the thermal conductivity and the thermal capacity, of any desired measurement medium (2).

6. The method according to at least one of the preceding claims, wherein the created basic calibration is stored in the electronics unit.

7. The method according to at least one of the preceding claims, wherein the steps of determining the second thermal parameters of the second measurement medium (2) and of calculating the correction variable are repeated in the event that the second measurement medium (2) is changed.

**8.** The method according to at least one of the preceding claims, wherein the first thermal parameters of the first measurement medium are newly determined, or wherein the second thermal parameters of the second measurement medium (2) are newly determined and are compared with the original first or second thermal parameters and a deviation is determined, wherein a state of the thermal flow sensor (100) and/or of the second measurement medium (2) is concluded on the basis of the deviation.

**9.** The method according to claim 8, wherein, on the basis of the deviation, one or more of the following states of the thermal flow sensor (100) or of the second measurement medium (2) is concluded:

- contaminations of the sensor element (101, 102, 103) or of the thermal flow sensor (100);
- deposits on the sensor element (101, 102, 103) or on the thermal flow sensor (100);
- formation of a biofilm on the sensor element (101, 102, 103) or on the thermal flow sensor (100);
- damage to the sensor element (101, 102, 103) or to the thermal flow sensor (100);
- an at least partial degradation of the second measurement medium (2).

**10.** The method according to at least one of the preceding claims, wherein the steps for creating the basic calibration, determining the second thermal parameters of the second measurement medium (2) and calculating the correction variable are repeated in the event that a defect of the thermal flow sensor (100) occurs.

**11.** The method according to at least one of the preceding claims, wherein the thermal flow sensor (100) is connected, in particular temporarily, to a calibration device for the creation of the basic calibration, wherein the calibration device has a pipeline, or a channel, and a pump element, and wherein the pump element establishes a flow through the pipeline, or the channel, by the first measurement medium with the defined value of the flow speed.

**12.** The method according to at least one of the preceding claims, wherein the thermal flow sensor (100), for the determination of the second thermal parameters of the second measurement medium (2) and for the sensing of the flow speed of the second measurement medium (2), is attached, at a measurement point passed through by the second measurement medium (2), to a pipeline, or a channel, passed through by the second measurement medium (2).

**13.** A thermal flow sensor (100), wherein the thermal flow sensor (100) has at least one sensor element (101, 102, 103) and an electronics unit which is designed to be operated by means of the method according to at least one of claims 1 to 12.

**Revendications**

**1.** Procédé destiné à l'exploitation d'un capteur d'écoulement thermique (100), le capteur d'écoulement thermique (100) présentant au moins un élément capteur (101, 102, 103) et une unité électronique, lequel procédé comprend les étapes suivantes :

- Réalisation d'un étalonnage de base du capteur d'écoulement thermique (100), le capteur d'écoulement thermique (100) mesurant, au cours de la réalisation de l'étalonnage de base, au moins une vitesse d'écoulement d'un premier produit mesuré et générant une valeur mesurée de la vitesse d'écoulement, le premier produit mesuré présentant des premiers paramètres thermiques définis, comprenant une première conductivité thermique et une première capacité thermique, et s'écoulant avec au moins une valeur définie d'une vitesse d'écoulement, et l'étalonnage de base ayant pour effet que la valeur de la vitesse d'écoulement du premier produit mesuré générée par le capteur d'écoulement thermique (100) est ajustée à la valeur définie de la vitesse d'écoulement du premier produit mesuré ;
- Détermination des deuxièmes paramètres thermiques, comprenant une deuxième conductivité thermique et une deuxième capacité thermique, d'un deuxième produit mesuré (2) au moyen du capteur d'écoulement thermique (100)
- Calcul d'une grandeur de correction, la grandeur de correction compensant les écarts des deuxièmes paramètres thermiques du deuxième produit mesuré (2) par rapport aux premiers paramètres thermiques du premier produit mesuré (2) ; et
- Mesure de la vitesse d'écoulement du deuxième produit mesuré (2) et génération de valeurs mesurées de la vitesse d'écoulement compensées au moyen de la grandeur de correction.

**2.** Procédé selon la revendication 1, pour lequel, pour la détermination des deuxièmes paramètres thermiques du deuxième produit mesuré (2), une vitesse d'écoulement du deuxième produit mesuré (2) égale à zéro est présente.

**3.** Procédé selon l'une des revendications 1 ou 2, pour lequel l'élément capteur (101, 102, 103) est chauffé périodiquement pour la détermination des deuxièmes paramètres thermiques du deuxième produit mesuré (2) au moyen d'une tension alternative introduite dans l'élément capteur (101, 102, 103), une courbe de température de l'élément capteur (101, 102, 103) étant déterminée simultanément, et les deuxièmes paramètres thermiques étant déterminés à l'aide de propriétés de la courbe de température, notamment de l'amplitude maximale de la courbe de température, et d'une comparaison de la courbe de tension alternative avec la courbe de température, notamment par calcul du déphasage entre la courbe de tension alternative et la courbe de température.

**4.** Procédé selon la revendication 3, pour lequel le troisième harmonique de la courbe de température est comparé au troisième harmonique de la courbe de température pour déterminer les deuxièmes paramètres thermiques.

**5.** Procédé selon au moins l'une des revendications précédentes, pour lequel un modèle mathématique du capteur d'écoulement (100) est utilisé pour calculer la grandeur de correction, le modèle mathématique décrivant une dépendance d'une valeur mesurée établie d'une vitesse d'écoulement mesurée par rapport à des paramètres thermiques, comprenant la conductivité thermique et la capacité thermique, de n'importe quel produit mesuré (2).

**6.** Procédé selon au moins l'une des revendications précédentes, pour lequel l'étalonnage de base réalisé est stocké dans l'unité électronique.

**7.** Procédé selon au moins l'une des revendications précédentes, pour lequel les étapes de détermination des deuxièmes paramètres thermiques du deuxième produit mesuré (2) et de calcul de la grandeur de correction sont répétées dans le cas où le deuxième produit mesuré (2) est changé.

**8.** Procédé selon au moins l'une des revendications précédentes,

pour lequel les premiers paramètres thermiques du premier produit mesuré sont redéterminés ou
pour lequel les deuxièmes paramètres thermiques du deuxième produit mesuré (2) sont redéterminés et comparés aux premiers ou aux deuxièmes paramètres thermiques initiaux et un écart est déterminé, un état du capteur d'écoulement thermique (100) et/ou du deuxième produit mesuré (2) étant conclu à l'aide de l'écart.

**9.** Procédé selon la revendication 8, pour lequel, à l'aide de l'écart, on conclut à un ou plusieurs des états suivants du capteur d'écoulement thermique (100) ou du deuxième produit mesuré (2) :

- Impuretés de l'élément capteur (101, 102, 103) ou du capteur d'écoulement thermique (100) ;
- Dépôts sur l'élément capteur (101, 102, 103) ou sur le capteur d'écoulement thermique (100) ;
- Formation d'un biofilm sur l'élément capteur (101, 102, 103) ou sur le capteur d'écoulement thermique (100) ;
- Endommagement de l'élément capteur (101, 102, 103) ou du capteur d'écoulement thermique (100) ;
- Décomposition au moins partielle du deuxième produit mesuré (2).

**10.** Procédé selon au moins l'une des revendications précédentes, pour lequel les étapes de réalisation de l'étalonnage de base, de détermination des deuxièmes paramètres thermiques du deuxième produit mesuré (2) et de calcul de la grandeur de correction sont répétées dans le cas où un défaut du capteur d'écoulement thermique (100) se produit.

**11.** Procédé selon au moins l'une des revendications précédentes, pour lequel le capteur d'écoulement thermique (100) est relié, notamment temporairement, à un dispositif d'étalonnage pour la réalisation de l'étalonnage de base, le dispositif d'étalonnage comprenant une conduite ou un canal, ainsi qu'un élément de pompage, et l'élément de pompage établissant un écoulement à travers la conduite ou le canal avec le premier produit mesuré avec la valeur définie de la vitesse d'écoulement.

**12.** Procédé selon au moins l'une des revendications précédentes, pour lequel le capteur d'écoulement thermique (100) pour la détermination des deuxièmes paramètres thermiques du deuxième produit mesuré (2) et pour la mesure de la vitesse d'écoulement du deuxième produit mesuré (2) est monté sur une conduite ou un canal, d'un point de mesure traversé par le deuxième produit mesuré (2).

**13.** Capteur d'écoulement thermique (100), ledit capteur d'écoulement thermique (100) comprenant au moins un élément capteur (101, 102, 103) et une unité électronique,
lequel capteur est conçu pour être utilisé au moyen du procédé selon au moins l'une des revendications 1 à 12.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016137826 A1